# EUROPEAN PATENT SPECIFICATION

(11) **EP 3 106 974 B1**
(45) Date of publication and mention of the grant of the patent: **07.11.2018**
(21) Application number: 15002660.7
(22) Date of filing: 11.09.2015
(51) Int. Cl.: G06F 3/0486, G06F 3/0488, H04M 1/725

(54) **MOBILE TERMINAL AND OPERATING METHOD THEREOF**
MOBILES ENDGERÄT UND BETRIEBSVERFAHREN DAFÜR
TERMINAL MOBILE ET PROCÉDÉ FONCTIONNEMENT CORRESPONDANT

(30) Priority: 15.06.2015 KR 20150084198
(43) Date of publication of application: 21.12.2016
(73) Proprietor: LG Electronics Inc., Seoul 07336 (KR)
(72) Inventor: YIM, Soyeon, 06772 Seoul (KR); LEE, Jungbin, 06772 Seoul (KR)
(74) Representative: Beyer, Andreas

(56) References cited:
- EP-A1- 2 385 689
- EP-A2- 1 739 533
- US-A1- 2009 140 986
- US-A1- 2011 202 872
- US-A1- 2013 053 105

## Description

### BACKGROUND

The present disclosure relates to a mobile terminal and an operation method thereof.

Terminals may be divided into mobile/portable terminals or stationary terminals according to whether to be portable. According to whether to be directly portable by a user, the mobile terminals may be divided again into handheld terminals and vehicle mount terminals.

Functions of a mobile terminal are being diversified. For example, there are functions of data and voice communication, image and video capturing through a camera, voice recording, music file playback through a speaker system, and outputting an image or a video on a display unit. Some of terminals have an additional electronic game play function or perform a multimedia player function. In particular, mobile terminals nowadays may receive a broadcasting signal or a multicast signal providing visual content such as a video or a television program.

According to diversification of functions, such a terminal is being implemented in a multimedia player type having complex functions therein, for example, image or video capturing, playback of a music or video file, a game, and broadcast reception.

In order to support and improve functions of the terminal, improving a structural part and/or software part of the terminal may be considered.

US 2011/202872 A1 discloses an apparatus for performing multi-tasking, and more particularly a multi-tasking performance apparatus and method which easily enable a shift between a plurality of applications being executed and a shift into an initial application. A currently operating application window is simultaneously displayed, with at least one executed application window by overlapping the executed application window on the currently operating application window according to a predetermined format.

US 2009/140986 A1 relates to a method, apparatus, system and computer program product, provided for transferring files stored on a source device to a target device by dragging and dropping the file from the source device touchscreen to the target device touchscreen. When the source device detects that the user has dragged the file to the edge, or other predefined location, of the source device touchscreen, the source device will automatically identify and establish a connection with the target device. Once the connection has been established, an image or icon associated with the file can be transferred to the target device, so that the user of the target device can indicate the location to which the file should be transferred by dragging the icon to that location. Once the target device user drops the icon at the predefined location, the file can be transferred to that location.

### SUMMARY

Embodiments provide a mobile terminal and an operation method thereof capable of controlling an operation of the mobile terminal or a peripheral device paired with the mobile terminal by using information provided in a deform display area on a display unit. The invention is set out in the appended set of claims. The embodiments and/or examples of the following description which are not covered by the appended claims are considered as not being part of the present invention.

In an embodiment, a mobile terminal includes a display unit. The mobile terminal includes: a display unit providing a general display area and a deform display area; a control unit controlling the display unit to display a plurality of items in the deform display area, receive a first input for moving any one item of the plurality of items toward the general display area, and display an execution screen of an application corresponding to the item on the general display area according to the received first input.

The mobile terminal may further include: a short-range communication module performing short range communication, wherein the control unit controls the short range communication module to receive a second input for moving any one item among the plurality of items in a direction that is not a direction in which the general display area is disposed, and to transmit a request for executing an application corresponding to the item to a peripheral device paired with the mobile terminal according to the second input.

The plurality of items may be app icons respectively corresponding to applications recently executed in the mobile terminal.

The plurality of items may be user icons respectively corresponding to other users who are not a user of the mobile terminal.

Each of the plurality of items may be an alarm item received by the mobile terminal.

The control unit may display a plurality of interlock items interlockable with the selected item when the item is selected longer than a preset time, receive a drag input for moving the selected item to any one of the plurality of interlock items, and perform a function corresponding to the one interlock item according to the received drag input.

Each of the plurality of items may be an app icon representing an application, each of the plurality of interlock items is an interlock icon representing a peripheral device paired with the mobile terminal, and the control unit transmits a request for executing an application corresponding to the selected item to a peripheral device corresponding to the interlock icon according to the drag input.

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram for explaining a mobile terminal related to an embodiment.
Fig. 2 is a flowchart for explaining an operation method of a mobile terminal according to an embodiment.
Figs. 3a and 3b illustrate a plurality of items displayed in a deform display area according an embodiment.
Figs. 4a to 4c illustrate an embodiment in which an application is executed which corresponds to an item according to an input for moving the item displayed in the deform display area toward a general display area.
Figs. 5a and 5b illustrate an embodiment in which an application corresponding to an item is executed through a peripheral device paired with a mobile terminal according to an input for moving the item displayed in a deform display area in a direction that is not a direction in which a general display area is disposed, according to an embodiment.
Fig. 6 illustrates an embodiment in which an application corresponding to an item included in a deform display area is executed in a peripheral device through two touch inputs.
Figs. 7a to 7c illustrate a scenario executable when an item included in a deform display area is selected longer than a preset time or longer according to an embodiment.
Figs. 8a to 8c illustrate a scenario executable in a case where an item included in a deform display area is selected longer than a preset time according to an embodiment.
Figs. 9a to 9c illustrate an embodiment in which alarm information corresponding to an alarm item is provided according to an input for moving the alarm item displayed in a deform display area toward a general display area according to an embodiment.
Figs. 10a and 10b illustrate an embodiment in which detailed information corresponding to an alarm item is provided through a peripheral device paired with a mobile terminal according to an input for moving the alarm item displayed in a deform display area in a direction that is not a direction in which the general display area is disposed, according to an embodiment.

### DETAILED DESCRIPTION OF THE EMBODIMENTS

Reference will now be made in detail to the embodiments of the present disclosure, examples of which are illustrated in the accompanying drawings, in which like numbers refer to like elements throughout, and a repetitive explanation will be omitted. In the following description, usage of suffixes such as 'module', 'part' or 'unit' used for referring to elements is given merely to facilitate explanation of the present invention, without having any significant meaning by itself. In the following description, detailed descriptions of well-known functions or constructions will be omitted since they would obscure the invention in unnecessary detail. In addition, the accompanying drawings are used to help easily understand the technical idea of the present invention and it should be understood that the idea of the present invention is not limited by the accompanying drawings. This invention should not be construed as limited to specific disclosure forms.

It will be understood that, although the terms first, second, etc. may be used herein to describe various elements, these elements should not be limited by these terms. These terms are only used to distinguish one element from another.

It will be understood that when an element is referred to as being "connected" or "coupled" to another element, it may be directly connected or coupled to the other element or intervening elements may be present. In contrast, when an element is referred to as being "directly connected" or "directly coupled" to another element, there are no intervening elements present.

As used herein, the singular forms "a," "an" and "the" are intended to include the plural forms as well, unless the context clearly indicates otherwise.

It will be further understood that the terms "comprises", "comprising,", "includes" and/or "including", when used herein, specify the presence of stated features, integers, steps, operations, elements, components or combinations thereof, but do not preclude the presence or addition of one or more other features, integers, steps, operations, elements, components, or combinations thereof.

A mobile terminal described herein may include a mobile phone, a smart phone, a laptop computer, a digital broadcast terminal, a personal digital assistants (PDA), a portable multimedia player (PMP), a navigator, a slate PC, a tablet PC, an ultrabook, a wearable device (for example, a smart watch, a smart glass, or a head mounted display (HMD)).

However, those skilled in the art may easily understand that a configuration according to an embodiment is also applicable to a stationary terminal such as a digital TV, desktop computer, or digital signage, except for a case where the configuration is only applicable to a mobile terminal.

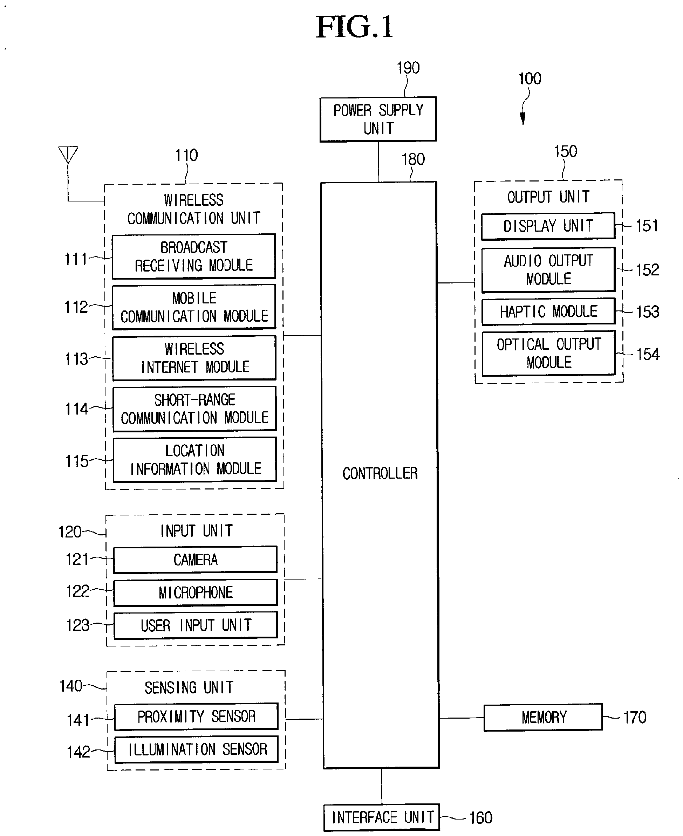

Fig. 1 is a block diagram for explaining a mobile terminal related to an embodiment.

The mobile terminal 100 may include a wireless communication unit 110, an input unit 120, a sensing unit 140, an output unit 150, an interface unit 160, a memory unit 170, a controller 180, and a power supply unit 190. Since the elements illustrated in Fig. 1 are not essential for realizing a mobile terminal, a mobile terminal to be described herein may include more or fewer elements than the above-described.

The wireless communication unit 110 may include one or more modules enabling wireless communication between the mobile terminal 100 and a wireless communication system, between the mobile terminal 100 and another mobile terminal 100, or between the mobile terminal 100 and an external server. In addition, the wireless communication 110 may include one or more modules connecting the mobile terminal 100 to one or more networks.

The wireless communication unit 110 may include at least one of a broadcast reception module 111, a mobile communication module 112, a wireless internet module 113, a short range communication module 114, and a location information module 115.

The input unit 130 may include a camera 121 or an image input unit for an image signal input, a microphone 122 or an audio input unit for inputting an audio signal, a user input unit 123 (e.g., a touch key, a mechanical key, etc.) for receiving information from a user. Voice data or image data collected by the input unit 120 may be analyzed and processed with user's control commands.

The sensing unit 140 may include at least one sensor for sensing at least one of surrounding environment information around the mobile terminal and user information. For example, the sensing unit 140 may include at least one selected from a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, an ultrasonic sensor, an optical sensor (e.g., the camera (see 121)), a microphone (see 122), a battery gauge, an environmental sensor(e.g., a barometer, a hygrometer, a thermometer, a radiation sensor, a thermal sensor, a gas detection sensor, etc.), a chemical sensor(e.g., an e-nose, a healthcare sensor, a biometric sensor, etc.). Furthermore, the mobile terminal disclosed herein may combine and use information sensed by at least two sensors among those sensors.

The output unit 150 is for generating an output related to sense of sight, sense of hearing, or sense of touch, and may include at least one selected from a display unit 151, an audio output unit 152, a haptic module 153, and a light output unit 154. The display unit 151 may form a mutually layered structure with or be formed into one with a touch sensor, and realize a touch screen. Such a touch screen may not only function as the user input unit 123 providing an input interface between the mobile terminal 100 and the user, but also provide an output interface between the mobile terminal 100 and the user.

The interface unit 160 plays a role of a passage with various kinds of external devices connected to the mobile terminal 100. This interface unit 160 may include at least one selected from a wired/wireless headset port, an external charger port, a wired/wireless data port, a memory card port, a port connecting a device having an identification module prepared therein, an audio input/output (I/O) port, a video input/output (I/O) port, and an earphone port. In the mobile terminal 100, a proper control may be performed on a connected external device in correspondence to connection between the external device and the interface unit 160.

In addition, the memory 170 stores data for supporting various functions of the mobile terminal 100. The memory 170 may store a plurality of application programs or applications driven in the mobile terminal 100, data for operations of the mobile terminal 100, and instructions. At least a part of these application programs may be downloaded from an external server through wireless communication. In addition, at least a part of these application programs may exist in the mobile terminal 100 at the time of release for basic functions (e.g., a call originating or receiving function, a message transmitting and receiving function). Moreover, the application programs are stored in the memory 170 and installed in the mobile terminal 100, and then may be driven to perform operations (or functions) of the mobile terminal by the control unit 180.

The control unit 180 typically controls overall operations of the mobile terminal 100 besides operations related to the application programs. The control unit 180 may provide the user with, or process proper information or functions by processing a signal, data, or information input or output through the above-described elements, or driving the application programs stored in the memory 170.

In addition, the control unit 180 may control at least a part of the elements illustrated in Fig. 1 so as to drive the application programs stored in the memory 170. Furthermore, the control unit 180 may combine at least two elements among the elements included in the mobile terminal 100 and operate the combined.

The power supply unit 190 receives internal or external power under a control of the control unit 180 and supplies the power to each element included in the mobile terminal 100. The power supply unit 190 includes a battery and the battery may be an embedded type or replaceable battery.

At least a part of the elements may operate in cooperation with each other for realizing an operation, control, or control method of the mobile terminal according to various embodiments. In addition, the operation, control, or control method of the mobile terminal may be realized in the mobile terminal by driving at least one application program stored in the memory 170.

Hereinafter, the above-described elements are described in detail with reference to Fig. 1 before various embodiments realized through the mobile terminal 100 are described.

Firstly, in the wireless communication unit 110, the broadcast reception module 111 receives a broadcast signal and/or broadcast related information from an external broadcast management server through a broadcast channel. The broadcast channel may include a satellite channel or terrestrial channel. Two or more broadcast reception modules may be provided to the mobile terminal 100 for simultaneous broadcast reception or broadcast channel switching for at least two broadcast channels.

The mobile communication module 112 may transmit and receive wireless signals to and from at least one selected from a base station, an external terminal, and a server on a mobile communication network constructed according to technical standards or communication schemes for the mobile communication (e.g., Global System for Mobile communication (GSM), Code Division Multi Access (CDMA), Code Division Multi Access 2000 (CDMA 2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), and Long Term Evolution-Advanced (LTE-A) etc.).

The wireless signal may include data in various types according to transmission and reception of a voice call signal, video call signal, or character/multimedia message.

The wireless Internet module 113 refers to a module for a wireless Internet connection, and may be embedded in or prepared out of the mobile terminal 100. The wireless Internet module 113 is configured to transmit and receive a wireless signal over a communication network conforming to wireless Internet technologies.

The wireless Internet technologies include, for example, Wireless LAN (WLAN), Wireless-Fidelity (Wi-Fi), Wi-Fi Direct, Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), Long Term Evolution (LTE), and LTE-Advanced (LTE-A), and the wireless Internet module 113 transmits and receives data according to at least one wireless Internet technology within the range including Internet technology not described in the above.

From a viewpoint that an access to the wireless Internet through WiBro, HSDPA, HSUPA, GSM, CDMA, WCDMA, LTE, or LTE-A is performed through a mobile communication network, the wireless Internet module 113 accessing the wireless Internet through the mobile communication network may be understood as a kind of the mobile communication module 112.

The short range communication module 114 is for short range communication and may support the short range communication by using at least one selected from Bluetooth™, Radio Frequency Identification (RFID), Infrared Data Association (IrDA), Ultra Wideband UWB), ZigBee, Near Field Communication (NFC), Wi-Fi, Wi-Fi Direct, and Wireless Universal Serial Bus (Wireless USB) technologies. This short range communication module 114 may support, through a wireless area network, wireless communication between the mobile communication terminal 100 and a wireless communication system, between the mobile terminal 100 and another mobile terminal 100, or between the mobile terminal 100 and a network on which the other mobile terminal 100 or an external server is located. The wireless area network may be a wireless personal area network.

Here, the other mobile terminal 100 may be a wearable device (e.g., a smart watch, a smart glass, or an HMD) through which data is mutually exchangeable (or interlockable) with the mobile terminal 100 according to an embodiment. The short range communication module 114 may detect (or recognize) a wearable device capable of communicating with the mobile terminal 100. Furthermore, when the detected wearable device is authenticated to communicate with the mobile terminal 100, the control unit 180 may transmit at least a part of data processed in the mobile terminal 100 to the wearable device through the short range communication module 114. Therefore, a user of the wearable device may use the data processed by the mobile terminal 100 through the wearable device. For example, when a call is received by the mobile terminal 100, the user may perform a phone call through the wearable device, or when a message is received by the mobile terminal 100, the user may check the received message through the wearable device.

The location information module 115 is a module for obtaining a position of the mobile terminal, and as a representative example thereof, there is a global positioning system (GPS) module or Wi-Fi module. For example, when adopting the GPS module, the mobile terminal may obtain a location of the mobile terminal by using a signal transmitted from a GPS satellite. For another example, when adopting the Wi-Fi module, the mobile terminal may obtain the location of the mobile terminal on the basis of information on a wireless access point (AP) transmitting or receiving a wireless signal with the Wi-Fi module. If necessary, the location information module 115 may additionally or alternatively perform any one function among other modules in the wireless communication unit 110 in order to obtain data about the location of the mobile terminal. The location information module 115 is a module used for obtaining the location (or current location) of the mobile terminal, and is not limited to a module directly calculating or obtaining the location of the mobile terminal.

Next, the input unit 120 is for receiving image information (or an image signal), audio information (or an audio signal), data, or information input from the user, and may include one or a plurality of cameras 121 for inputting image information. The camera 121 process an image frame such as a still image or video obtained by an image sensor in a video call mode or capturing mode. The processed image frame may be displayed on the display unit 151 or stored in the memory 170. Furthermore, the plurality of cameras 121 prepared in the mobile terminal 100 may be arranged to form a matrix structure, and, through the cameras 121 forming this matrix structure, informations on images having different angles or different focuses may be input to the mobile terminal 100. In addition, the plurality of cameras 121 may be arranged in a stereo structure to obtain left and right images for realizing a stereoscopic image.

The microphone 122 may process an external sound signal as electrical voice data. The processed voice data may be variously used according to a function (or an application program) being performed in the mobile terminal 100. Furthermore, various noise removing algorithms may be implemented for removing noise occurring in a process for receiving the external sound signal.

The user input unit 123 is for receiving information from the user. When information is input through the user input unit 123, the control unit 180 may control an operation of the mobile terminal 100 in correspondence to the input information. This user input unit 123 may include a mechanical input unit (or mechanical key, for example, buttons positioned on the front and rear surfaces or on the side surfaces, a dome switch, a jog wheel, or a jog switch, etc.) and a touch type input unit. As an example, the touch type input unit may be configured with a virtual key displayed on a touch screen through a software processing, a soft key, or a visual key, or a touch key disposed on a portion other than the touch screen. In addition, the virtual key or the visual key may be displayed on the touch screen in various types and, for example, may be configured with graphics, texts, icons, videos, or a combination thereof.

Furthermore, the sensing unit 140 may sense at least one of environmental information surrounding the mobile terminal 100 and user information, and generate a sensing signal corresponding to the sensed information. The control unit 180 may control driving or operations of the mobile terminal 100, or perform data processing, a function, or an operation related to an application program installed in the mobile terminal 100, on the basis of the sensing signal. Hereinafter, representative sensors among various sensors that may be included in the sensing unit 140 will be described in detail.

Firstly, the proximity sensor 141 refers to a sensor detecting whether an object approaches or is in the proximity of a predetermined detecting surface by using a force of an electromagnetic field or an infrared ray without mechanical contact. This proximity sensor 141 may be disposed in an internal area of the mobile terminal surrounded by the above-described touch screen or around the touch screen.

An example of the proximity sensor 141, there is a transmissive photoelectric sensor, directly reflective photoelectric sensor, mirror reflective optoelectronic sensor, high frequency oscillatory proximity sensor, capacitive proximity sensor, inductive proximity sensor, infrared proximity sensor, and the like. When the touch screen is a capacitive type, the proximity sensor 141 may be configured to detect an access of a conductive object with a change in electric field according to the access of the object. In this case, the touch screen (or touch sensor) itself may be classified to a proximity sensor.

Hereinafter for convenience of explanation, an action is called "proximity touch" that a pointer does not contact the touch screen but is recognized as positioned on the touch screen, and an action is called "contact touch" that the pointer actually contacts the touch screen. A position at which an object is subject to a proximity touch over the touch screen means a position at which the object vertically corresponds to the touch screen when the object is subject to the proximity touch. The proximity sensor senses a proximity touch and a proximity touch pattern (e.g., proximity distance, proximity touch direction, proximity touch speed, proximity touch time, proximity touch position, proximity movement state, and the like). Furthermore, the control unit 180 may process data (or information) corresponding to a proximity touch action and the proximity touch pattern detected through the proximity sensor 141 and, in addition, may output visual information corresponding to the processed data on the touch screen. In addition, the control unit 180 may perform a control on the mobile terminal 100 so that different operations or different data (or information) are processed according to whether a touch for an identical point on the touch screen is a proximity touch or a contact touch.

The touch sensor senses a touch (or a touch input) applied to the touch screen (or the display unit 151) by using at least one of various touch types such as resistive-film, capacitive, infrared ray, ultrasonic, and magnetic field types.

As an example, the touch sensor may convert a change in pressure applied to a specific part or a change in capacitance generated at a specific part of the touch screen into an electrical input signal. The touch sensor may detect a position or an area that is touched by a touching object touching the touch screen, or pressure or capacitance at the time of the touch. Here, the touching object, for example, a finger, a touch pen, a stylus pen, or a pointer, may be an object applying a touch on the touch sensor.

In this way, when there is a touch input on the touch sensor, a signal (signals) corresponding thereto is (are) transmitted to a touch controller. The touch controller processes the signal(s) and then transmits data corresponding thereto to the controller 180. Accordingly the controller 180 may determine which area of the display unit 151 is touched. Here, the touch controller may be a separate element other than the control unit 180, or be the control unit itself.

Furthermore, the controller 180 may perform different controls or an identical control according to a kind of the touch object, which touches the touch screen (or a touch key prepared other than the touch screen). Whether to perform different controls or an identical control according to a kind of the touch object may be determined according to a current operation state of the mobile terminal 100 or an application program being executed.

The above-described touch sensor and proximity sensor may sense independently or in a combined manner various types of touches on the touch screen, wherein the touches include a short(or a tap) touch, a long touch, a multi-touch, a drag touch, a flick touch, a pinch-in touch, a pinch-out, a swipe touch, and a hovering touch.

The ultrasonic sensor may recognize position information on a touch object by using an ultrasonic wave. The control unit 180 may calculate a position of a wave generating source through information sensed by an optical sensor and a plurality of ultrasonic sensors. The position of the wave generating source may be calculated by using a property that a light is very faster than the ultrasonic wave, in other words, a time that a light arrives at an optical sensor is very shorter than a time that an ultrasound wave arrives at an ultrasonic sensor. In detail, with a light as a reference signal, the position of the wave generating source may be calculated by using a time difference with a time when an ultrasonic wave arrives.

Furthermore, as for a configuration of the input unit 120, the camera 121 includes at least one selected from a camera sensor (e.g., a CCD, or a CMOS sensor), a photo sensor (or an image sensor), and a laser sensor.

The camera 121 and the laser sensor may be combined together and sense a touch of the sensing target for a 3-dimensional stereoscopic image. The photo sensor may be stacked on a display element, and this photo sensor scans a movement of the sensing target close to the touch screen. In detail, the photo sensor includes photo diodes and transistors in rows/columns and scans a target mounted on the photo sensor by using an electrical signal changed according to an amount of light applied to the photo diodes. In other words, the photo sensor performs coordinate calculation on the sensing target according to a change amount of the light and, through this, position information on the sensing target may be obtained.

The display unit 151 displays (outputs) information processed by the mobile terminal 100. For example, the display unit 151 may display execution screen information on the application program driven in the mobile terminal 100 or user interface (UI) information or graphic user interface (GUI) information according to the execution screen information.

In addition, the display unit 151 may be configured as a stereoscopic display unit displaying a stereoscopic image.

A 3-dimensional display scheme such as a stereoscopic scheme (glasses type), an auto-stereoscopic scheme (glassless type), or a projection scheme (a holographic scheme) may be applied to the stereoscopic display unit.

The audio output module 152 may be received from the wireless communication unit 110 in a call signal reception mode, call mode or recording mode, voice recognition mode, broadcast reception mode or the like, or output audio data stored in the memory 170. The audio output module 152 also outputs a sound signal relating to a function (e.g., call signal reception sound, message reception sound, or the like) performed by the mobile terminal 100. The audio output module 152 may include a receiver, speaker, or buzzer.

The haptic module 153 generates various tactile effects that the user may feel. A representative example of the tactile effect generated by the haptic module 153 may be vibration. Strength and a pattern of the vibration generated by the haptic module 153 may be controlled by user selection or setting by the control unit. For example, the haptic module 153 may output different vibrations sequentially or by synthesizing them.

Besides the vibration, the haptic module 153 may generate various tactile effects including an effect by a stimulus such as a pin array moving vertically to a contact skin surface, air jetting force or air absorptive force through an outlet or an inlet, brush against a skin surface, contact to an electrode, or static electricity, and an effect by reproducing a cold and warmth sense by using a device capable of absorbing or generating heat.

The haptic module 153 may be realized in order for the user to feel the tactile effect through a muscle sense of a finger or arm, as well as to deliver a tactile effect through a direct contact. The haptic modules 153 may be provided two or more in number according to a configuration aspect of the mobile terminal 100.

The optical output unit 154 may output a signal for notifying an event occurrence by using a light from an optical source of the mobile terminal 100. The event occurred in the mobile terminal 100 may be exemplified with message reception, call signal reception, missed calls, alarm, schedule notification, email reception, or information reception through an application.

The signal output by the optical output unit 154 is implemented according to that the mobile terminal emits a monochromatic light or a multi-chromatic light towards the front or rear surface. The signal output may be completed when the mobile terminal detects that the user checks the event.

The interface unit 160 plays a role as a channel with all external devices connected to the mobile terminal 100. The interface unit 160 may receive data from the external device, receive power and deliver the power to each element inside the mobile terminal 100, or allow internal data of the mobile terminal 100 to be transmitted to the external device. For example, the interface unit 160 may include a wired/wireless headset port, external charger port, wired/wireless data port, memory card port, a port for connecting a device to which an identification module is provided, video input/output (I/O) port, earphone port, or the like.

Furthermore, the identification module is a chip storing various pieces of information for authenticating user's authority for the mobile terminal 100, and may include a user identify module (UIM), a subscriber identity module (SIM), or a universal subscriber identity module (USIM). A device (hereinafter 'identification device') including an identification module may be manufactured in a smart card type. Accordingly, the identification device may be connected to the mobile terminal 100 through the interface unit 160.

In addition, when the mobile terminal 100 is connected to an external cradle, the interface unit 160 may be a channel through which power is supplied from the cradle to the mobile terminal 100 or a channel through which various command signals input from the cradle by the user are delivered. The various command signals or the power input from the cradle may operate as signals for perceiving that the mobile terminal 100 is accurately mounted in the cradle.

The memory 170 may store a program for operations of the control unit 180 and temporarily store input/output data (e.g., a phone book, messages, still images, videos, etc.). The memory 170 may store data about various patterned vibrations and data about sound output at the time of touch input on the touch screen.

The memory 170 may a storage medium including at least one of a flash memory, hard disk, Solid State Disk (SSD), Silicon Disk Drive (SDD), multimedia card micro type memory, card type memory (e.g., SD or XD memory, etc.), random access memory (RAM), static random access memory (SRAM), read-only memory (ROM), electrically erasable programmable read-only memory (EEPROM), programmable read-only memory (PROM), magnetic memory, magnetic disk, and optical disc. The mobile terminal 100 may operate in relation to a web storage performing a storage function of the memory 170 over the internet.

Furthermore, as described above, the controller 180 normally controls the overall operation and an operation related to an application program of the mobile terminal 100. For example, when a state of the mobile terminal satisfies a set condition, the control unit 180 executes or releases a lock state that limits an input of a user's control command to applications.

In addition, the control unit 180 may perform a control or a process related to a voice call, data communication, or a video call, etc., or may perform a pattern recognition processing for recognizing a written input and a drawing input performed on the touch screen as a character and an image, respectively. Furthermore, the control 180 may combine and control any one of or a plurality of the above-described elements in order to implement various embodiments to be described below in the mobile terminal 100.

The power supply unit 190 receives external or internal power under a control of the control unit 180 and supplies power necessary for operating each element. The power supply unit 190 includes a battery. The battery may be an embedded battery that is rechargeable and may be detachably coupled for charging.

The power supply unit 190 may include a connection port, and the connection port may be configured as an example of the interface 160 to which an external charger providing power is electrically connected for charging the battery.

As another example, the power supply unit 190 may be configured to charge the battery in a wireless manner without using the connection port. In this case, the power supply unit 190 may receive, from an external wireless power transmitting device, power by using one or more of an inductive coupling manner on the basis of a magnetic induction phenomenon and a magnetic resonance coupling manner on the basis of an electromagnetic resonance phenomenon.

Hereinafter, various embodiments may be implemented in a recording medium that is readable with a computer or a similar device by using software, hardware, or a combination thereof.

Next, description is made about a communication system realizable through the mobile terminal 100 according to an embodiment.

Firstly, the communication system may use different wireless interfaces and/or a physical layer. For example, the wireless interface available by the communication system may include Frequency Division Multiple Access (FDMA), Time Division Multiple Access (TDMA), Code Division Multiple Access (CDMA), Universal Mobile Telecommunications Systems (UMTS)(in particular, Long Term Evolution (LTE), or Long Term Evolution-Advanced (LTE-A)), Global System for Mobile Communications (GSM), or etc.

Hereinafter, for convenience of explanation, description will be provided limitedly to CDMA. However, it is obvious that the embodiments may be applied to all communication systems including an Orthogonal Frequency Division Multiplexing (OFDM) wireless communication system as well as a CDMA wireless communication system.

The CDMA wireless communication system may include at least one terminal 100, at least one base station (BS, also may be referred to as Node B or Evolved Node B), at least one BS controller (BSC) and a mobile switching center (MSC). The MSC may be configured to be connected to the Public Switched Telephone Network (PSTN) and BSCs. The BSCs may be connected to the BS in pair through a backhaul line. The backhaul line may be prepared according to at least one selected from E1/T1, ATM, IP, PPP, Frame Relay, HDSL, ADSL, and xDSL. Accordingly, the plurality of BSCs may be included in a CDMA wireless communication system.

Each of a plurality of BSs may include at least one sector, and each sector may include an omni-directional antenna or an antenna indicating a specific radial direction from the BS. In addition, each sector may include two or more antennas having various types. Each BS may be configured to support a plurality of frequency allocations and each of the plurality of allocated frequencies may have specific spectrum (e.g., 1.25MHz, or 5MHz).

An intersection between the sector and the frequency allocation may be called as a CDMA channel. The BS may be called as a base station transceiver subsystem (BTSs). In this case, one BSC and at least one BS are called together as a "base station". The base station may also represent a "cell site". In addition, each of a plurality of sectors for a specific BS may also be called as a plurality of cell sites.

A broadcasting transmitter (BT) transmits a broadcast signal to terminals 100 operated in a system. The broadcast reception module 111 illustrated in Fig. 1 is provided in the terminal 100 for receiving the broadcast signal transmitted by the BT.

Furthermore, in the CDMA wireless communication system, a global positioning system (GPS) may be linked for checking a location of the mobile terminal 100. A satellite assists in grasping the location of the mobile terminal 100. Useful location information may be obtained by less than two or at least two satellites. Here, the location of the mobile terminal 100 may be tracked by using all techniques, which are capable of tracking the location, as well as a GPS tracking technique. In addition, at least one of GPS satellites may be selectively or additionally responsible for transmitting satellite digital multimedia broadcasting (DMB).

The location information module 115 prepared in the mobile terminal 100 is for detecting, operating or identifying the location of the mobile terminal 100, and may representatively include a GPS module and a WiFi module. If necessary, the location information module 115 may alternatively or additionally perform any function of other modules in the wireless communication unit 110 for obtaining data for the location of the mobile terminal 100.

The location information module 115 may precisely calculate 3D current location information according to latitude, longitude, and altitude by calculating distance information from three or more satellites and precise time information, and by applying a trigonometry to the calculated information. A method is currently widely used which calculates location and time information using three satellites, and corrects an error in the calculated location and time information using another satellite. The location information module 115 may calculate speed information by continuously calculating a current location in real time. However, it is difficult to precisely measure the location of the mobile terminal 100 by using the GPS module in a dead zone, such as an indoor area, of the satellite signal. Accordingly, in order to compensate for location measurement in the GPS manner, a WiFi positioning system (WPS) may be used.

The WPS is a technique for tracking the location of the mobile terminal 100 using a WiFi module prepared in the mobile terminal 100 and a wireless access point (AP) transmitting or receiving a wireless signal to or from the WiFi module, and may mean a location measurement technique based on a wireless local area network (WLAN) using WiFi.

The WPS may include a WiFi positioning server, the mobile terminal 100, a wireless AP connected to the mobile terminal 100, and a database storing arbitrary wireless AP information.

The mobile terminal 100 connected to the wireless AP may transmit a location information request message to the WiFi positioning server.

The WiFi positioning server extracts information on the wireless AP connected to the mobile terminal 100 on the basis of the location information request message (or a signal) of the mobile terminal 100. The information on the wireless AP connected to the mobile terminal 100 may be transmitted to the WiFi positioning server through the mobile terminal 100 or transmitted to the WiFi positioning server from the wireless AP.

The information on the wireless AP, which is extracted on the basis of the location information request message of the mobile terminal 100, may be at least one selected from a MAC address, Service Set Identification (SSID), Received Signal Strength Indicator (RSSI), Reference Signal Received Power (RSRP), Reference Signal Received Quality (RSRQ), channel information, Privacy, Network Type, Signal Strength, and Noise Strength.

As described above, the WiFi positioning server may receive information on the wireless AP connected to the mobile terminal 100, and extract wireless AP information corresponding to the wireless AP to which the mobile terminal is being connected from the pre-constructed database. At this point, information on arbitrary wireless APs, which is stored in the database, may be information on a MAC Address, SSID, channel information, Privacy, Network Type, latitudinal and longitudinal coordinates of a wireless AP, a building name and floor on which the wireless AP is located, indoor detailed location information (GPS coordinates available), address of an owner of the wireless AP, phone number, and etc. At this point, in order to remove a wireless AP provided by using a mobile AP or an illegal MAC address in the location measurement process, the WiFi positioning server may extract a predetermined number of pieces of wireless AP information in the descending order of an RSSI.

Thereafter, the WiFi positioning server may extract (or analyze) location information on the mobile terminal 100 by using at least one wireless AP information extracted from the database. The location information of the mobile terminal 100 is extracted (or analyzed) by comparing the stored and the received wireless AP information.

As a method of extracting (or analyzing) location information on the mobile terminal 100, a cell-ID method, a fingerprint method, a trigonometry, and a landmark method may be used.

The cell-ID method is a method for determining a location of a wireless AP having strongest strength from among surrounding wireless AP information collected by a mobile terminal. This method is advantageous in that implementation is simple, an additional cost is not necessary, and location information may be rapidly obtained. However, when installation intensity of a wireless AP is lower, positioning precision becomes lowered.

The fingerprint method is a method for selecting a reference location in a service area, collecting signal strength information, and estimating a location through signal strength information transmitted from a mobile terminal on the basis of the collected information. In order to use the fingerprint method, it is necessary to construct a database for propagation characteristics in advance.

The trigonometry is a method for operating a location of a mobile terminal on the basis of a distance between coordinates of at least three wireless APs and the mobile terminal. For estimating the distances between the mobile terminal and the wireless APs, signal strength is converted into distance information, or a time of arrival (ToA) of a wireless signal, a time difference of arrival (TDoA) of a wireless signal, an angle of arrival (AoA) of a wireless signal may be used.

The landmark method is a method of measuring a location of a mobile terminal by using a landmark transmitter.

Besides the above-described methods, various algorithms may be used for extracting (or analyzing) location information on a mobile terminal.

The location information on the mobile terminal 100 extracted in this way may be transmitted to the mobile terminal 100 through the WiFi positioning server and the mobile terminal 100 may obtain the location information.

The mobile terminal 100 may obtain location information by being connected to at least one wireless AP. At this point, the number of wireless APs requested for obtaining the location information on the mobile terminal 100 may be variously varied according to a wireless communication environment in which the mobile terminal 100 is located.

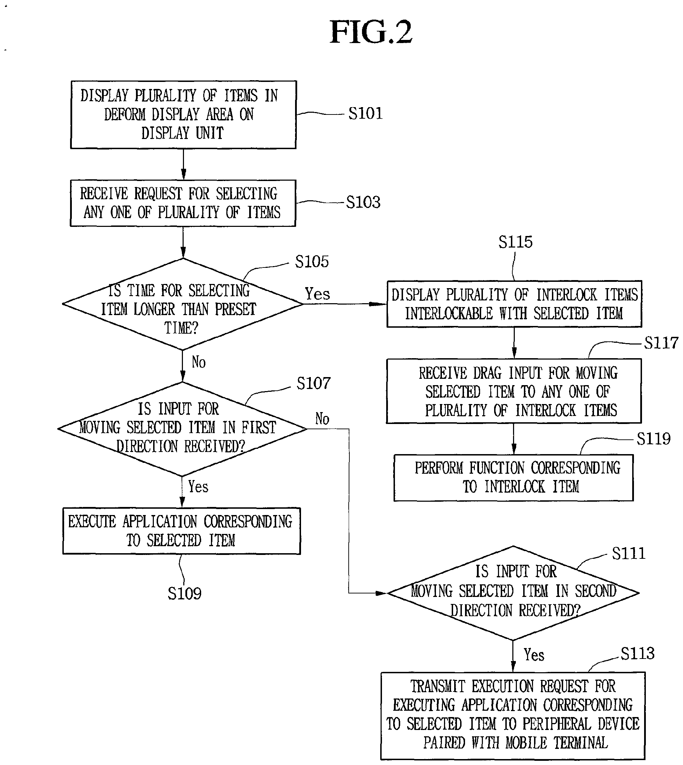

Hereinafter, description is provided about an operation method of a mobile terminal according to an embodiment with reference to Fig. 2.

Fig. 2 is a flowchart illustrating an operation method of a mobile terminal according to an embodiment.

The display unit 151 of the mobile terminal 100 displays a plurality of items in a deform display area thereon (operation S101). An area where the display unit 151 displays an image may include a general display area and the deform display area.

The general display area corresponds to a main screen, and the deform display area corresponds to a sub-screen disposed in one side of the main screen. The size of the general display area may be greater than that of the deform display area.

The general display area may be an area in which an image is displayed according to a user input or a call signal. When the user input or call signal is not received, the control unit 180 may control the display unit 151 so as not to display any image in the general display area. The state where any image is not displayed in the general display area may indicate that the general display area in an inactivated state. In this case, the general display area may be displayed in black. In other words, the control unit 180 may control the power supply unit 190 so that the general display area of the display unit 151 is not displayed. On the other hand, the state where an image is displayed in the general display area may indicate that the general display area is in an activated state. For example, the general display area may be activated according to a user input for selecting a home button provided in the mobile terminal 100.

In addition, the general display area is an area where an execution screen corresponding to an item is displayed according to an input for moving any one of the plurality of items toward the general display area, while any information has not been displayed.

The deform display area may be an area disposed in one side of the general display area and a plurality of items may be displayed therein. When an input for displaying an image in the general display area is not received from the outside, the control unit 180 may control the power supply unit 190 to display the deform display area. In order to display only the deform display area on the display unit 151, the control unit 180 may control the power supply unit 190 so that minimum power is supplied to the display unit 151. The deform display area may be an area operated in a power saving mode. While not displaying the deform display area, the control unit 180 may control the display unit 151 to display the deform display area when an alarm is received from the outside.

In an embodiment, the plurality of items may be icons respectively corresponding to recently executed applications.

In another embodiment, the plurality of items may be icons respectively corresponding to other users. In this case, on each of the icons, one or more of a user's image and name may be displayed.

In another embodiment, the plurality of items may be alarm items respectively corresponding to alarms. The alarm may be, but is not limited to, any one of a schedule alarm set on the mobile terminal 100, an alarm for notifying reception of a text message, and an alarm for notifying reception of a message through a mobile message application, or may be any one of all alarms obtained by the mobile terminal 100.

The number of items displayed in the deform display area may be a preset number, but is not limited thereto, and may be differed according to the number of recently executed applications, user's setting, or the like. The deform display area will be described below with reference to drawings.

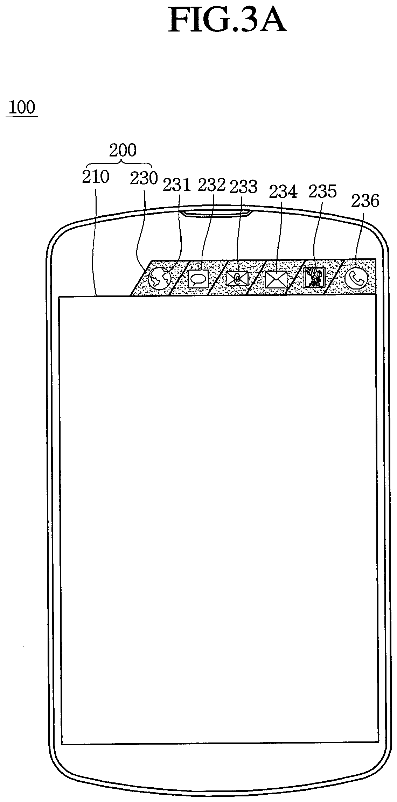

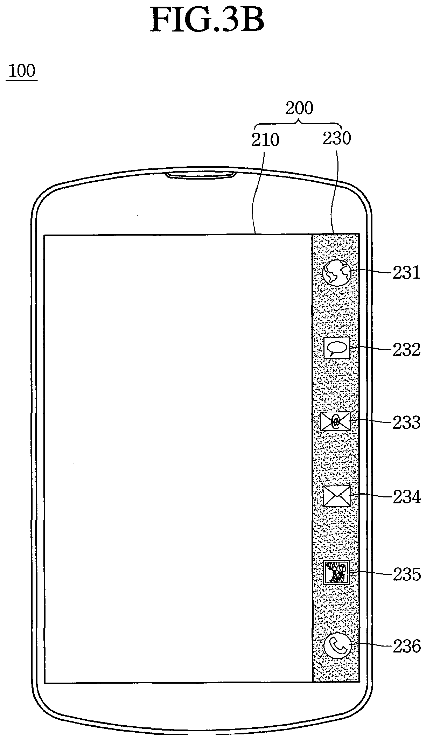

Figs. 3a and 3b illustrate the plurality of items displayed in the deform display area according an embodiment.

It is assumed that Figs. 3a and 3b correspond to a case where an input for displaying an image in the general display area 210 is not received from the outside. In other words, the general display area 210 is in a state where no image is displayed therein. Referring to Fig. 3a, a screen 200 on which the display unit 151 displays an image may include the general display area 210 and the deform display area 230. The deform display area 230 may be disposed on the top side of the general display area 210. No image may be displayed in the general display area 210 and a plurality of icons 231 to 236 may be displayed in the deform display area 230. A plurality of app icons corresponding to recently executed applications may be displayed in order in the deform display area 230. For another example, a plurality of app icons corresponding to applications registered with a bookmark by a user may be displayed in the deform display area 230. For another example, a plurality of app icons corresponding to applications executed more than a preset number of times during a preset time period may be displayed in the deform display area 230.

Fig. 3b illustrates a case where the deform display area 230 is disposed at the right side of the general display area 210. A position of the deform display area 230 may be changed according to a user's setting.

A description is further provided with reference to Fig. 2 again.

The control unit 180 of the mobile terminal 100 receives a request for selecting any one of a plurality of displayed items (operations S103), and checks whether the item is selected longer than a preset time (operation S105). In an embodiment, the request for selecting the icon may be a touch input for touching the icon.

When the item is selected shorter than the preset time, the control unit 180 may check whether an input for moving the selected item in a first direction is received (operation S107).

In an embodiment, the first direction may be a direction in which the general display area 210 is disposed.

In an embodiment, the input for moving the selected item in the first direction may be an input for swiping an icon included in the deform display area 230 toward the general display area 210.

When the input for moving the selected icon in the first direction is received, the control unit 180 executes an application corresponding to the selected item (operation S109). After executing the application corresponding to the selected item, the control unit 180 may display an execution screen of a corresponding application through the display unit 151.

Operations S103 to S109 will be described with reference to the drawings below.

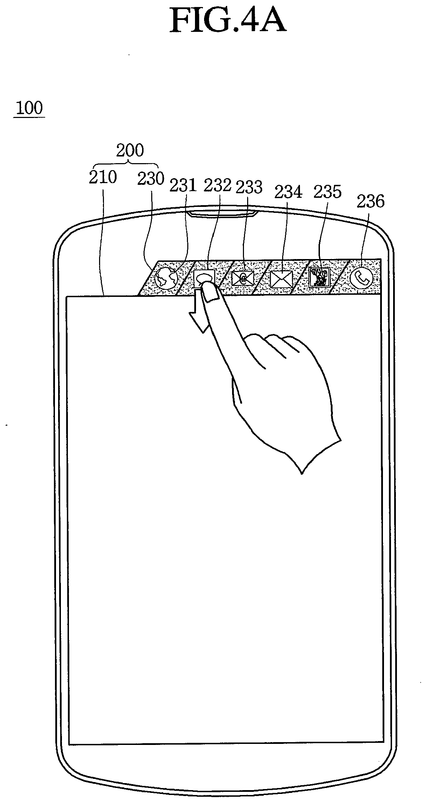

Figs. 4a to 4c illustrate an embodiment in which an application corresponding to a corresponding item is executed according to an input for moving the item displayed in the deform display area toward the general display area according to an embodiment.

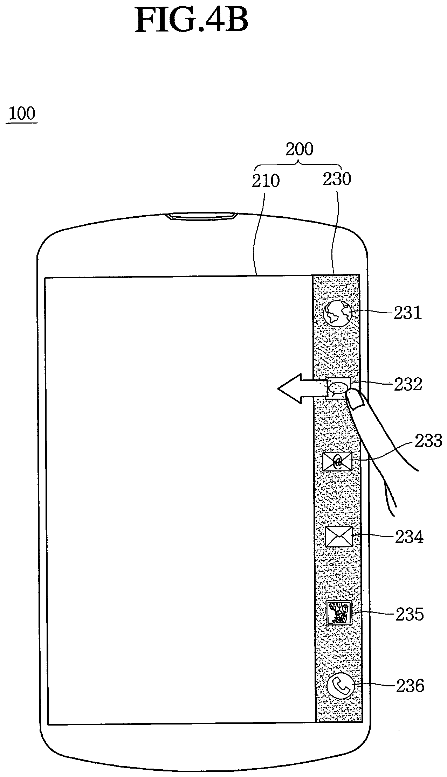

Fig. 4a illustrates a case where the deform display area 230 is disposed at the top side of the general display area 210, and Fig. 4b illustrates a case where the deform display area 230 is disposed at the right side of the general display area 210.

Referring to Fig. 4a, the control unit 180 may receive a request for selecting a mobile message app icon 232 displayed in the deform display area 230, and receive an input for moving the selected mobile message app icon 232 toward the general display area 210 (i.e. downwards). In other word, the control unit 180 may receive an input for swiping the mobile message app icon 232 toward the general display area 210. The control unit 180 may execute a mobile message application corresponding to the mobile message app icon 232 in response to the received input.

Referring to Fig. 4a, the control unit 180 may receive a request for selecting the mobile message app icon 232 displayed in the deform display area 230, and receive an input for moving the selected mobile message app icon 232 toward the general display area 210 (i.e. leftwards). In other word, the control unit 180 may receive an input for swiping the mobile message app icon 232 toward the general display area 210. The control unit 180 may execute a mobile message application corresponding to the mobile message app icon 232 in response to the received input.

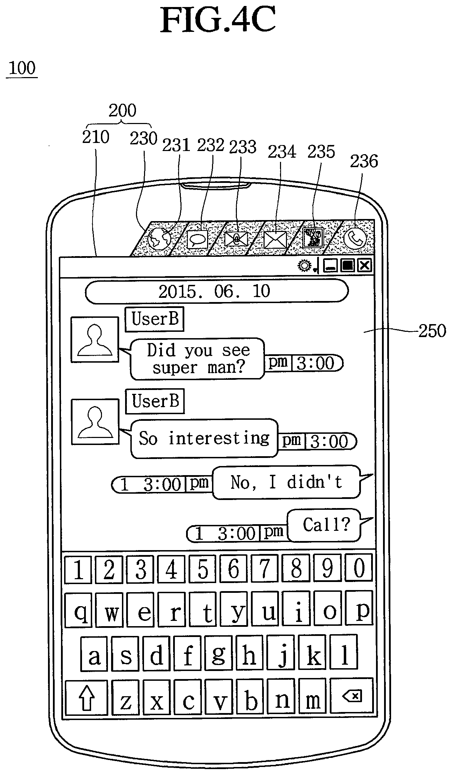

The control unit 180 may control the display unit 151 to display an execution screen 250 according to execution of a mobile message application in the general display area 210 as illustrated in Fig. 4c.

Typically, in order to execute the mobile message application, a user has to activate the general display area 210 by pressing down a button such as a home button, and then select the mobile message app icon. However, according to the foregoing embodiment, a corresponding application may be easily executed through the deform display area 230 without activating the general display area 210.

A description is further provided with reference to Fig. 2 again.

Furthermore, when the input for moving the selected item in the second direction is received (operation Sill), the control unit 180 transmits an application execution request for executing an application corresponding to the selected item to a peripheral device paired with the mobile terminal 100 (operation S113). In an embodiment, the second direction may not be a direction in which the general display area 210 is disposed. In an embodiment, the input for moving the selected item in the second direction may be an input for swiping an icon included in the deform display area 230 in a direction that is not a direction in which the general display area 210 is disposed.

The peripheral device for receiving the application execution request may execute the corresponding application. The peripheral device may be an electronic device such as a watch type mobile terminal, smart TV, smart phone, or the like. The peripheral device may be paired with the mobile terminal 100 through a short range communication module 114 of the mobile terminal 100 and exchange information.

Operations S111 to S113 will be described with reference to the drawings below.

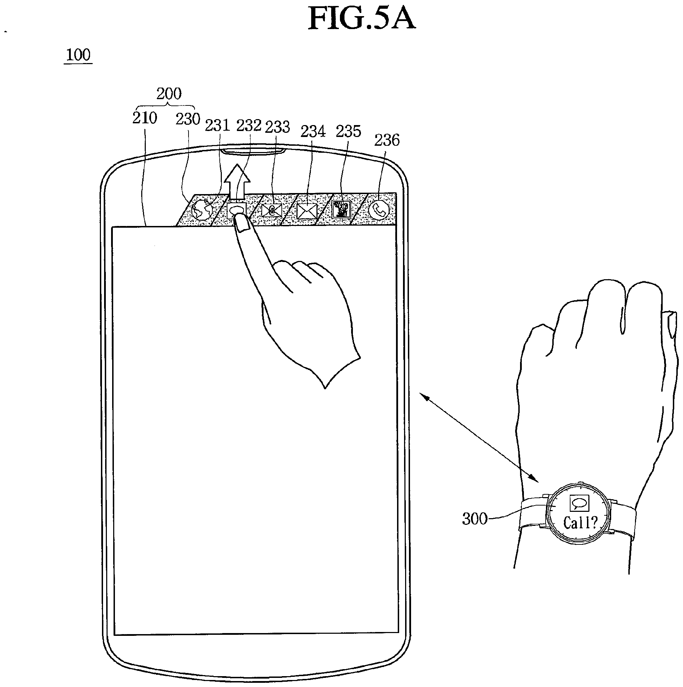

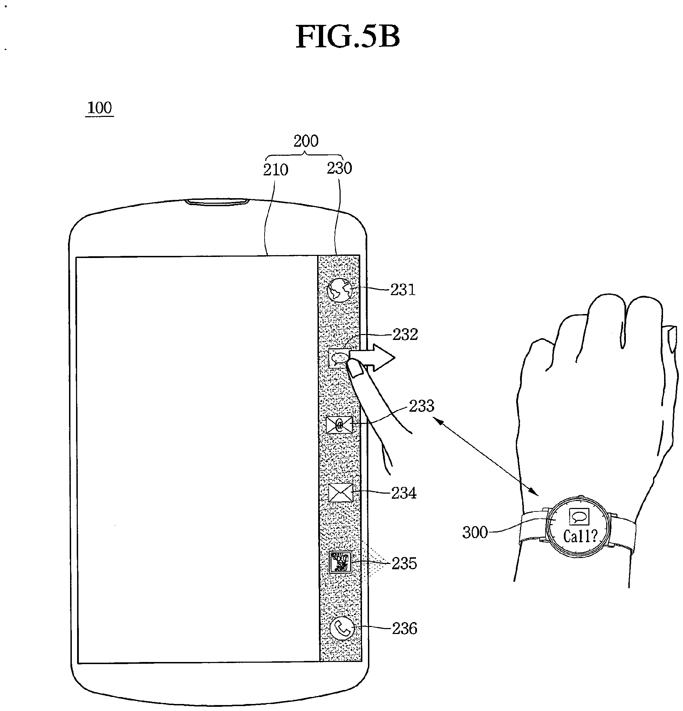

Figs. 5a and 5b illustrate an embodiment in which an application corresponding to an item is executed through a peripheral device paired with a mobile terminal according to an input for moving the item displayed in the deform display area in a direction that is not a direction in which the general display area is disposed according to an embodiment.

Fig. 5a illustrates a case where the deform display area 230 is disposed at the top side of the general display area 210, and Fig. 5b illustrates a case where the deform display area 230 is disposed at the right side of the general display area 210.

Referring to Fig. 5a, the control unit 180 may receive a request for selecting a mobile message app icon 232 displayed in the deform display area 230, and receive an input for moving the selected mobile message app icon 232 to an upper side (a right side in Fig. 5b) that is not toward the general display area 210. In other word, the control unit 180 may receive an input for swiping the mobile message app icon 232 to the upper side that is not a direction in which the general display area 210 is located. The control unit 180 may transmit, to the peripheral device 300 paired with the mobile terminal 100, a command for allowing a mobile message application corresponding to the mobile message app icon 232 to be executed in response to a received input. The control unit 180 may transmit the command to the peripheral device 300 through the short range communication module 114. The peripheral device 300 may execute a corresponding application according to the command received from the mobile terminal 100 to display an execution screen. The peripheral device 300 may also include all the configuration of the mobile terminal 100 described in relation to Fig. 1.

When the mobile message application is not installed in the peripheral device 300, the control unit 180 may receive a response thereto from the peripheral device 300.

According to another embodiment, an execution request of application corresponding to an icon included in the deform display area 230 may also be transmitted through two touch inputs.

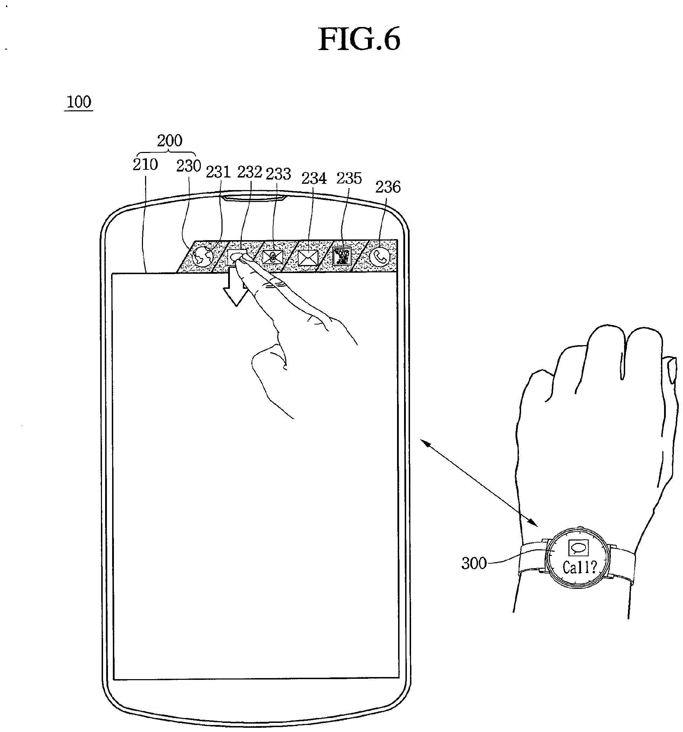

Fig. 6 illustrates an embodiment in which an application corresponding to an item included in the deform display area 230 is executed in a peripheral device through two touch inputs according to an embodiment.

Referring to Fig. 6, the control unit 180 may receive a request for selecting the mobile message app icon 232 displayed in the deform display area 230 through two touch inputs, and receive an input for moving the selected mobile message app icon 232 toward the general display area 210 (i.e. downwards). In other word, the control unit 180 may receive an input for swiping the mobile message app icon 232 toward the general display area 210 on the basis of two touch inputs. The control unit 180 may transmit a command for allowing a mobile message application corresponding to the mobile message app icon 232 to be executed in response to a received input to the peripheral device 300 paired with the mobile terminal 100. The control unit 180 may transmit the command to the peripheral device 300 through the short range communication module 114.

A description is further provided with reference to Fig. 2 again.

Furthermore, when the item is selected longer than the preset time in operation S105, the control unit 180 displays a plurality of interlock items representing the selected item and an item interlockable therewith through the display unit 151 (operation S115). In an embodiment, the preset time may be two seconds, which is just an exemplary numerical value.

In an embodiment, the plurality of interlock items may be device icons respectively corresponding to peripheral devices paired with the mobile terminal 100. When the selected item is an app icon representing an application, the device icon may be used to allow an application corresponding to the selected icon to be executed in the peripheral device corresponding to the device icon.

In another embodiment, each of the plurality of interlock items may be an application icon providing a communication means with other users. When the selected item is a user icon representing the other user, the application icon may be used in executing an application providing a means for communicating with a user corresponding to the selected user icon.

The control unit 180 receives a drag input for moving the selected item to any one of the plurality of interlock items (operation S117), and performs a function corresponding to a corresponding interlock item according to the received drag input (operation S119).

Operations S115 to S119 will be described with reference to the drawings below.

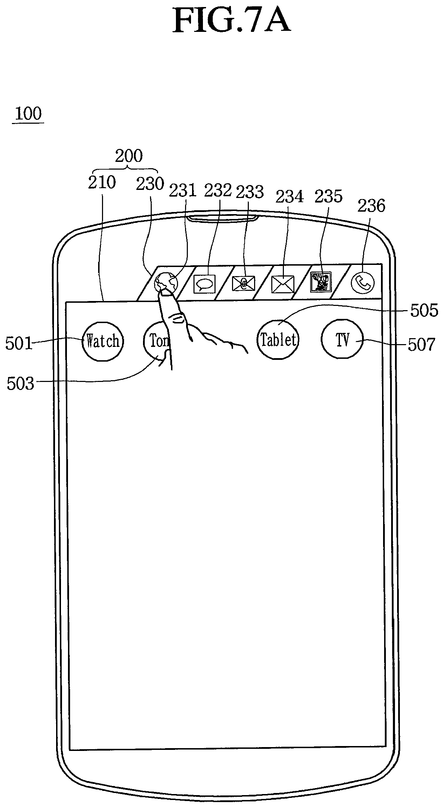

Figs. 7a to 7c illustrate a scenario executable when an item included in the deform display area is selected longer than a preset time according to an embodiment.

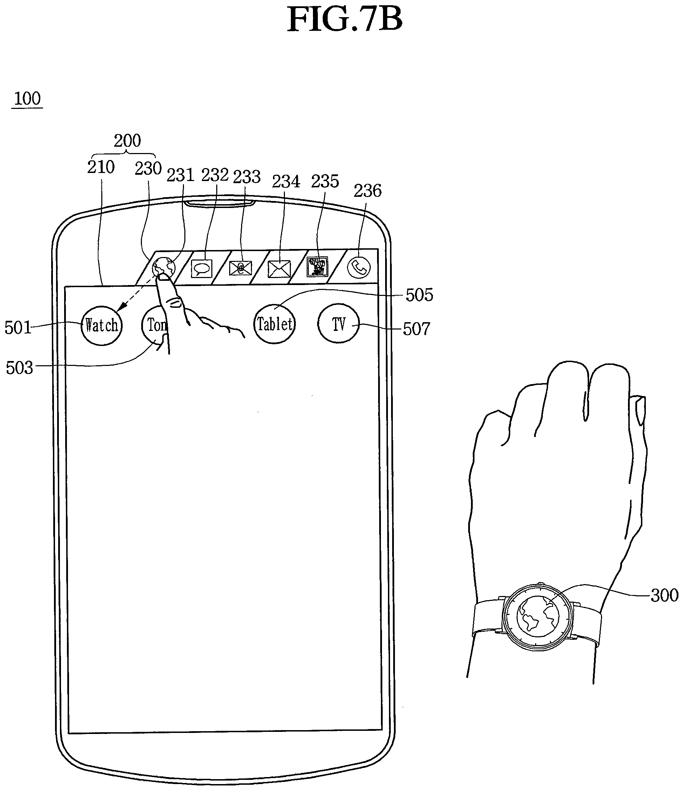

Fig. 7a illustrates a case where the deform display area 230 is disposed at the top side of the general display area 210, and Fig. 7b illustrates a case where the deform display area 230 is disposed at the right side of the general display area 210.

It is assumed that in Fig, 7a, the plurality of icons 231 to 236 included in the deform display area are icons respectively representing recently executed applications in the mobile terminal 100.

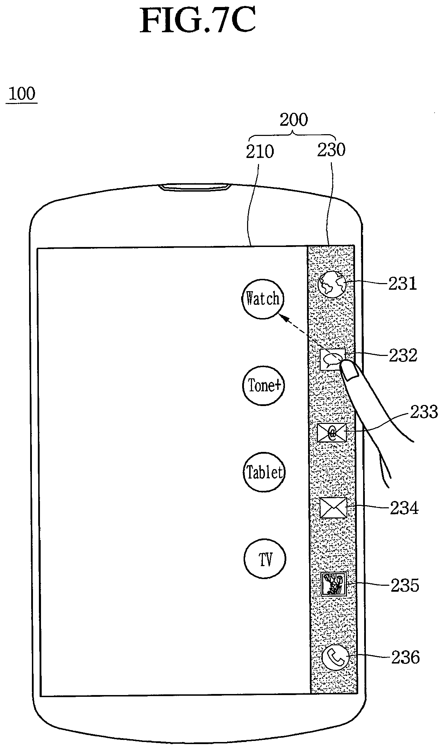

Referring Fig. 7a, any one of the plurality of icons 231 to 236 included in the deform display area 230 is selected longer than the preset time, the control unit 180 may control the display unit 151 to display a plurality of interlock device icons 501 to 507 in the general display area 210. In Fig. 7, it is assumed that the internet app icon 231 is selected. The plurality of interlock device icons 501 to 507 may be icons respectively representing peripheral devices paired with the mobile terminal 100. On each interlock device icon, one or more of a name and image of a peripheral device paired with the mobile terminal 100, and information on content stored in the peripheral device may be displayed. The plurality of interlock device icons 501 to 507 may be disposed at positions adjacent to the deform display area 230.

Then, when an input for dragging the selected Internet app icon 231 to a first interlock device icon 501 is received, the control unit 180 may transmit an execution request for executing an Internet application corresponding to the Internet app icon 231 to a watch type mobile terminal 300 corresponding to the first interlock device icon 501. As illustrated in Fig. 7b, the watch type mobile terminal 300 may execute the Internet application according to the execution request received through the mobile terminal 100, and display an execution screen of the Internet application through the display unit.

Referring to Fig. 7c, when the input for dragging the selected Internet app icon 231 to the first interlock device icon 501 is received, the control unit 180 may transmit an execution request for executing an Internet application corresponding to the Internet app icon 231 to the watch type mobile terminal 300 corresponding to the first interlock device icon 501.

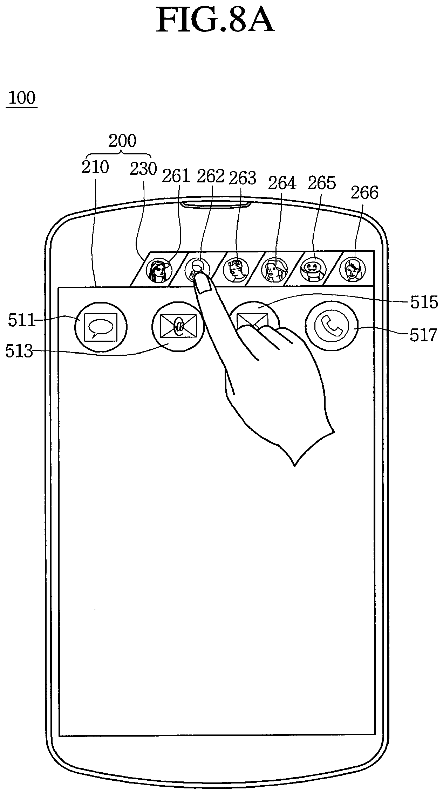

Figs. 8a to 8c illustrate a scenario executable when an item included in a deform display area is selected longer than a preset time according to an embodiment.

In Fig. 8a, it is assumed that a plurality of icons 261 to 266 included in the deform display area are icons respectively representing other users. In detail, each of the plurality of icons 261 to 236 may be an icon representing an opponent with whom a user recently communicates through the mobile terminal 100.

Referring to Fig. 8a, when any one of the plurality of icons 261 to 266 included in the deform display area 230 is selected longer than the preset time, the control unit 180 may control the display unit 151 to display the plurality of interlock app icons 511 to 517 in the general display area 210. In Fig. 8a, it is assumed that a first opponent icon 262 is selected. Each of the plurality of interlock app icons 511 to 517 may be an icon respectively representing a communication application through which communication may be performed with an opponent corresponding to the first opponent icon 262. On each interlock app icon, at least one of communication applications installed in the mobile terminal 100 may be displayed. The plurality of interlock app icons 511 to 517 may be disposed at positions adjacent to the deform display area 230.

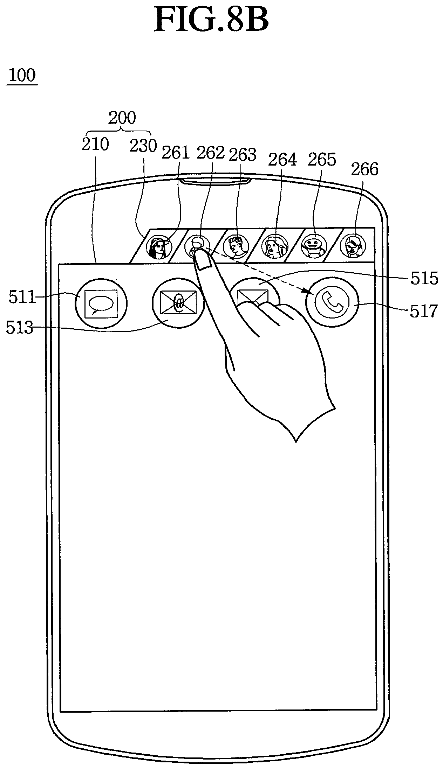

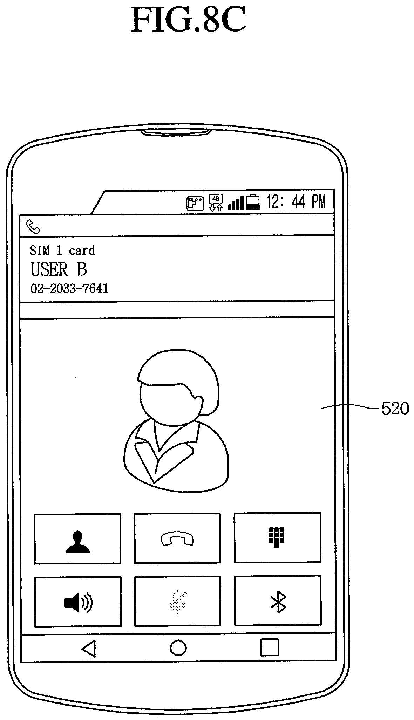

Then, as illustrated in Fig. 8b, when an input for dragging the selected first opponent icon 262 to a first interlock app icon 517 is received, the control unit 180 may execute a call application corresponding to the first interlock app icon 517 and at the same time, transmit a call signal to an opponent terminal corresponding to the first opponent icon 262. As illustrated in Fig. 8c, the control unit 180 may control the display unit 151 to display the execution screen 520 of the call application for transmitting the call signal to the opponent's terminal corresponding to the first opponent icon 262.

The user may easily communicate with the opponent through opponent's information provided in the deform display area 230 without a need for searching a contact list.

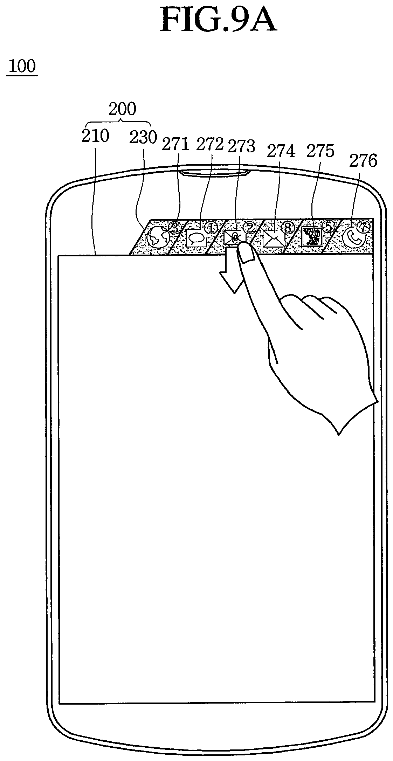

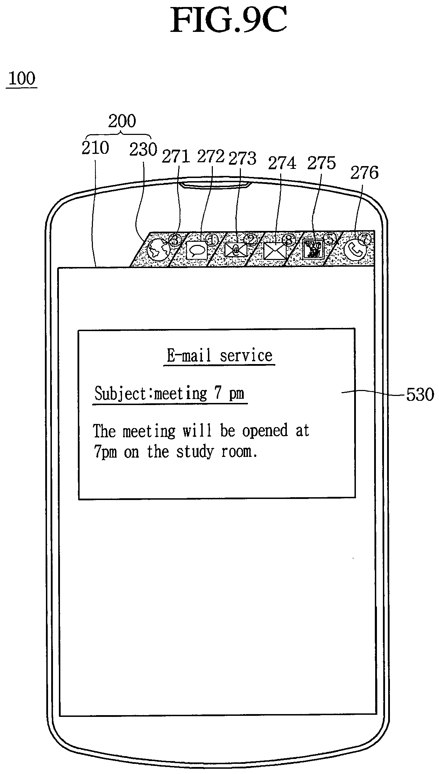

Next, a description will be provided with reference to Figs. 9a to 9c.

Figs. 9a to 9c illustrate an embodiment in which alarm information corresponding to an alarm item is provided according to an input for moving the alarm item displayed in a deform display area toward a general display area according to an embodiment.

Figs. 9a to 9c are embodiments corresponding to operations S103 to S109 of Fig. 2.

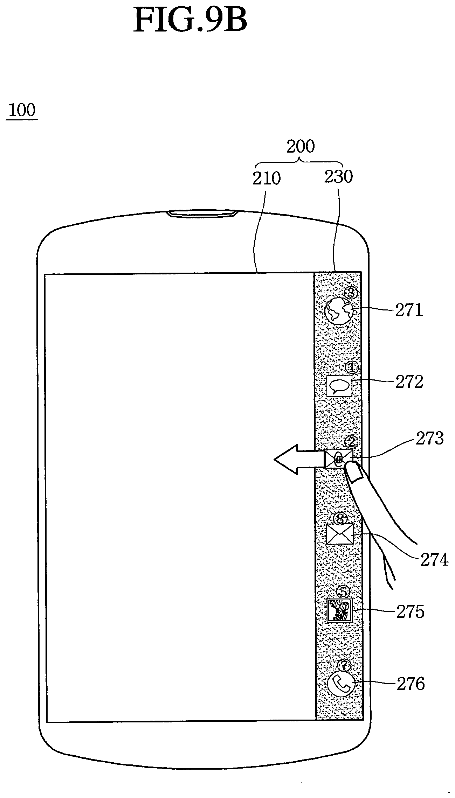

Fig. 9a illustrates a case where the deform display area 230 is disposed at the top side of the general display area 210, and Fig. 9b illustrates a case where the deform display area 230 is disposed at the right side of the general display area 210.

Referring to Figs. 9a and 9b, a plurality of alarm items 271 to 276 are displayed in the deform display area 230. The control unit 180 may receive a request for selecting a mail alarm item 273 displayed in the deform display area 230, and receive an input for moving the selected mail alarm item 273 toward the general display area 210. In other word, the control unit 180 may receive an input for swiping mail alarm item 273 toward the general display area 210. The control unit 180 may control the display unit 151 to provide details 530 of a mail corresponding to the mail alarm item 273.

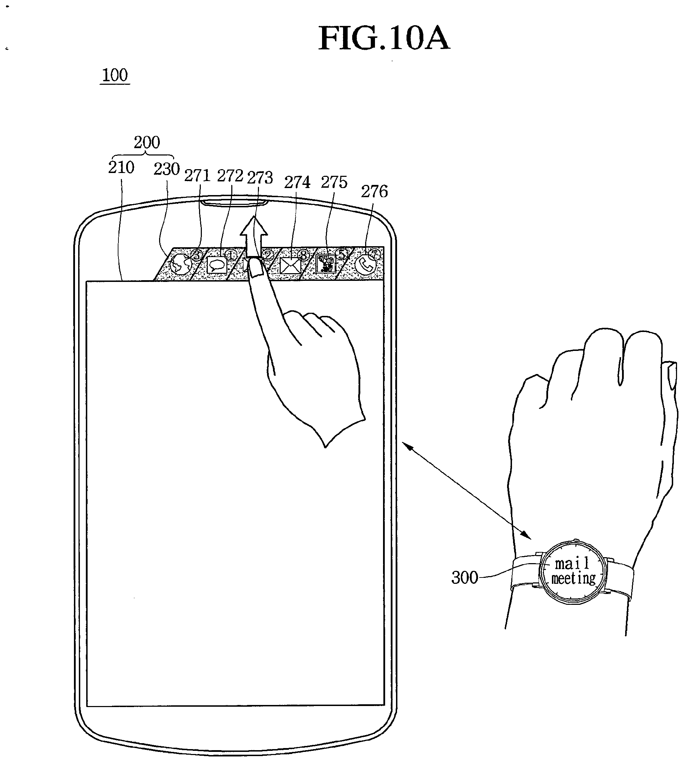

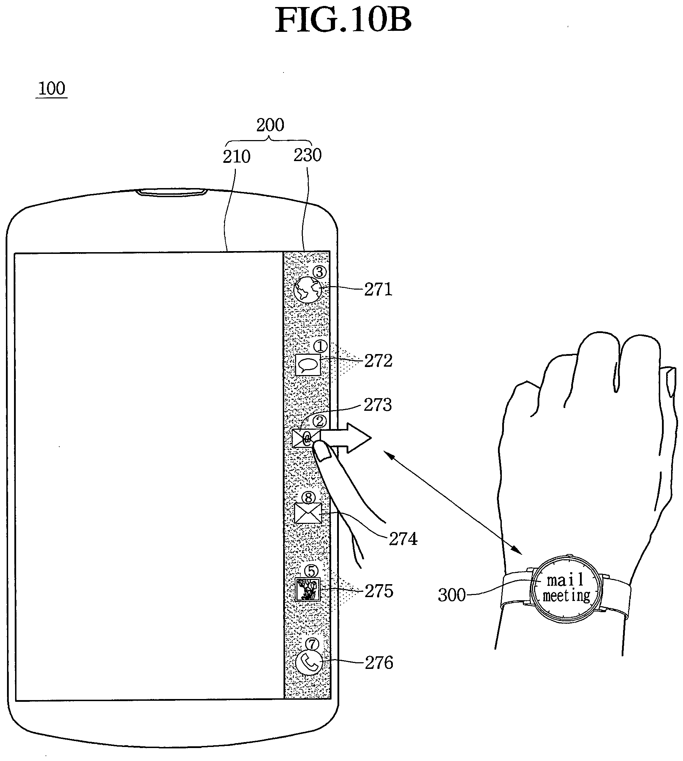

Next, a description will be provided with reference to Figs. 10a and 10b.

Figs. 10a and 10b illustrate an embodiment in which details corresponding to an alarm item is provided through a peripheral device paired with a mobile terminal according to an input for moving the alarm item displayed in a deform display area in a direction that is not a direction in which the general display area is disposed according to an embodiment.

Figs. 10a and 10b are embodiments corresponding to operations Sill to S113.

Fig. 10a illustrates a case where the deform display area 230 is disposed at the top side of the general display area 210, and Fig. 10b illustrates a case where the deform display area 230 is disposed at the right side of the general display area 210.

Referring to Figs. 10a and 10b, the control unit 180 may receive a request for selecting a mail alarm item 273 displayed in the deform display area 230, and receive an input for moving the selected mail alarm item 273 to an upper side (a right side in Fig. 10b) that is not toward the general display area 210. In other word, the control unit 180 may receive an input for swiping the mail alarm item 273 to the upper side that is not a direction in which the general display area 210 is located. The control unit 180 may transmits, to a peripheral device 300, a request for providing details of a mail corresponding to the mail alarm item 273 through the peripheral device 300 paired with the mobile terminal 100. The peripheral device 300 may receive the corresponding request to provide the details of the mail through the display unit.

The user may easily check the details for the alarm through the peripheral device 300 paired with the mobile terminal 100 without a need for checking the details on the mobile terminal 100.

The embodiments can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices, and carrier waves (such as data transmission through the Internet). In addition, the computer may also include the control unit 180 of the terminal.

According to various embodiments, a user may easily control an operation of a mobile terminal or a peripheral device paired with the mobile terminal by using information provided in a deform display area on a display unit.

Although embodiments have been described with reference to a number of illustrative embodiments thereof, it should be understood that numerous other modifications and embodiments can be devised by those skilled in the art that will fall within the scope of this invention. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for operating a mobile terminal (100), the method comprising:
displaying a plurality of items in a deform display area (230) of a screen on a display (151), the screen comprising the deform display area (230) and a general display area (210);
receiving a first input for swiping a first item among the plurality of items included in the deform display area (230) toward the general display area (210); and
displaying an execution screen of a first application corresponding to the first item among the plurality of items in the general display area (210) in response to the first input,
**characterized in that** the method is further comprises:
receiving a second input, which is longer than a preset time for selecting a second item among the plurality of items,
display a plurality of interlock device icons in the general display area (210), wherein each of the plurality of interlock device icons is representing a peripheral device paired with the mobile terminal (100),
receiving a third input for dragging the selected second item to an interlock device icon among the plurality of interlock device icons, and
transmitting an execution request for executing a second application corresponding to the second item to the peripheral device corresponding to the interlock device icon.

2. The method according to claim 1, further comprising:
transmitting a request for executing the second application corresponding to the second item among the plurality of items to a peripheral device paired with the mobile terminal (100) in response to a drag input that extends from the second item in a direction that is away from the general display area (210).

3. The method according to claim 1, wherein:
the plurality of items are application icons corresponding to applications recently executed in the mobile terminal;
the first item corresponds to a first application; and
the execution screen is for the first application,
or wherein each of the plurality of items is an alarm item notifying an event associated with an application and detected at the mobile terminal.

4. A mobile terminal (100) comprising:
a display (151);
a short-range communication module (114) configured to perform short range communication; and
a controller (180) configured to control the display (151) and the short- range communication module (114),
wherein the controller (180) is further configured to:
display a plurality of items in a deform display area of a screen on the display, the screen comprising the deform display area (230) and a general display area (210),
receive a first input for swiping a first item among the plurality of items included in the deform display area (230) toward the general display area (210),
display an execution screen of a first application corresponding to the first item in response to the first input,
**characterized in that** the controller (180) is further configured to:
receive a second input, which is longer than a preset time for selecting a second item among the plurality of items,
display a plurality of interlock device icons in the general display area (210), wherein each of the plurality of interlock device icons is representing a peripheral device paired with the mobile terminal (100),
receive a third input for dragging the selected second item to an interlock device icon among the plurality of interlock device icons, and
transmit an execution request for executing an application corresponding to the second item to the peripheral device corresponding to the interlock device icon.

5. The mobile terminal (100) according to claim 4, wherein the controller (180) is further configured to transmit a request for executing the second application corresponding to the second item among the plurality of items to a peripheral device paired with the mobile terminal (100) in response to a drag input that extends from the second item in a direction that is away from the general display area (210).

6. The mobile terminal according to claim 4, wherein:
the plurality of items are app icons corresponding to applications recently executed in the mobile terminal, or wherein each of the plurality of items is an alarm item notifying an event associated with an application and detected at the mobile terminal.

## Patentansprüche

1. Verfahren zum Betreiben eines mobilen Endgeräts (100), wobei das Verfahren umfasst:
Anzeigen mehrerer Objekte in einem Deform-Anzeigebereich (230) eines Bildschirms auf einem Display (151), wobei der Bildschirm den Deform-Anzeigebereich (230) und einen allgemeinen Anzeigebereich (210) aufweist,
Empfangen einer ersten Eingabe zum Wischen eines ersten Objekts aus den mehreren in dem Deform-Anzeigebereich (230) enthaltenen Objekten in Richtung des allgemeinen Anzeigebereichs (210), und
Anzeigen eines Ausführungsbildschirms einer dem ersten Objekt aus den mehrerer Objekten in dem allgemeinen Anzeigebereich (210) entsprechenden ersten Anwendung in Antwort auf die erste Eingabe,
**dadurch gekennzeichnet, dass** das Verfahren ferner umfasst:
Empfangen einer zweiten Eingabe, die länger ist als eine voreingestellte Zeitdauer, zum Auswählen eines zweiten Objekts aus den mehreren Objekten,
Anzeigen mehrerer Geräteverzahnungssymbole in dem allgemeinen Anzeigebereich (210), wobei jedes der mehreren Geräteverzahnungssymbole ein mit dem mobilen Endgerät (100) gepaartes Peripheriegerät repräsentiert,
Empfangen einer dritten Eingabe zum Ziehen des ausgewählten zweiten Objekts auf ein Geräteverzahnungssymbol unter den mehreren Geräteverzahnungssymbolen, und
Senden einer Ausführungsanforderung zum Ausführen einer dem zweiten Objekt entsprechenden zweiten Anwendung an das dem Geräteverzahnungssymbol entsprechende Peripheriegerät.

2. Verfahren nach Anspruch 1, ferner umfassend:
Senden einer Anforderung zum Ausführen der dem zweiten Objekt aus den mehreren Objekten entsprechenden zweiten Anwendung an ein mit dem mobilen Endgerät (100) gepaartes Peripheriegerät in Antwort auf eine Zieheingabe, die sich von dem zweiten Objekt in einer Richtung erstreckt, die von dem allgemeinen Anzeigebereich (210) weggerichtet ist.

3. Verfahren nach Anspruch 1, wobei:
die mehreren Objekte Anwendungssymbole sind, die kürzlich in dem mobilen Endgerät ausgeführten Anwendungen entsprechen,
das erste Objekt einer ersten Anwendung entspricht, und
der Ausführungsbildschirm für die erste Anwendung ist,
oder wobei jedes der mehreren Objekte ein Alarmobjekt ist, welches ein einer Anwendung zugehöriges und an dem mobilen Endgerät erfasstes Ereignis meldet.

4. Mobiles Endgerät (100), mit:
einem Display (151),
einem Nahbereichskommunikationsmodul (114), das zum Ausführen einer Nahbereichskommunikation konfiguriert ist, und
einer Steuereinheit (180), die dazu eingerichtet ist, das Display (151) und das Nahbereichskommunikationsmodul (114) zu steuern,
wobei die Steuereinheit (180) ferner konfiguriert ist zum:
Anzeigen mehrerer Objekte in einem Deform-Anzeigebereich eines Bildschirms auf dem Display, wobei der Bildschirm den Deform-Anzeigebereich (230) und einen allgemeinen Anzeigebereich (210) aufweist,
Empfangen einer ersten Eingabe zum Wischen eines ersten Objekts aus den in dem Deform-Anzeigebereich (230) enthaltenen Objekten in Richtung auf den allgemeinen Anzeigebereich (210),
Anzeigen eines Ausführungsbildschirms einer dem ersten Objekt entsprechenden ersten Anwendung in Antwort auf die erste Eingabe,
**dadurch gekennzeichnet, dass** die Steuereinheit (180) ferner konfiguriert ist zum:
Empfangen einer zweiten Eingabe, die länger als eine voreingestellte Zeitdauer ist, zum Auswählen eines zweiten Objekts aus den mehreren Objekten,
Anzeigen mehrerer Geräteverzahnungssymbole in dem allgemeinen Anzeigebereich (210), wobei jedes der mehreren Geräteverzahnungssymbole ein mit dem mobilen Endgerät (100) gepaartes Peripheriegerät repräsentiert,
Empfangen einer dritten Eingabe zum Ziehen des ausgewählten zweiten Objekts zu einem Geräteverzahnungssymbol unter den mehreren Geräteverzahnungssymbolen, und
Senden einer Ausführungsanforderung zum Ausführen einer dem zweiten Objekt entsprechenden Anwendung an das dem Geräteverzahnungssymbol entsprechende Peripheriegerät.

5. Mobiles Endgerät (100) nach Anspruch 4, bei dem die Steuereinheit (180) ferner dazu konfiguriert ist, eine Anforderung zum Ausführen der dem zweiten Objekt aus den mehreren Objekten entsprechenden zweiten Anwendung an ein mit dem mobilen Endgerät (100) gepaartes Peripheriegerät in Antwort auf eine Zieheingabe zu senden, die sich von dem zweiten Objekt in einer Richtung erstreckt, die von dem allgemeinen Anzeigebereich (210) weggerichtet ist.

6. Mobiles Endgerät nach Anspruch 4, bei dem:
die mehreren Objekte Anwendungssymbole sind, die kürzlich in dem mobilen Endgerät ausgeführten Anwendungen entsprechen, oder bei dem jedes der mehreren Objekte ein Alarmobjekt ist, welches ein einer Anwendung zugehöriges und an dem mobilen Endgerät erfasstes Ereignis meldet.

## Revendications

1. Procédé de fonctionnement d'un terminal mobile (100), le procédé consistant à :
afficher une pluralité d'éléments dans une zone d'affichage de déformation (230) d'un écran sur un dispositif d'affichage (151), l'écran comprenant la zone d'affichage de déformation (230) et une zone d'affichage générale (210) ;
recevoir une première entrée pour faire glisser un premier élément parmi la pluralité d'éléments compris dans la zone d'affichage de déformation (230) vers la zone d'affichage générale (210) ; et
afficher un écran d'exécution sur une première application correspondant au premier élément parmi la pluralité d'éléments dans la zone d'affichage générale (210) en réponse à la première entrée,
**caractérisé en ce que** le procédé consiste en outre à :
recevoir une deuxième entrée, qui est plus longue qu'un temps prédéfini pour sélectionner un second élément parmi la pluralité d'éléments,
afficher une pluralité d'icônes de dispositifs de verrouillage dans la zone d'affichage générale (210), chaque icône de la pluralité d'icônes de dispositifs de verrouillage représentant un dispositif périphérique apparié avec le terminal mobile (100),
recevoir une troisième entrée pour glisser le second élément sélectionné vers une icône de dispositif de verrouillage parmi la pluralité d'icônes de dispositifs de verrouillage, et
transmettre une requête d'exécution pour exécuter une seconde application correspondant au second élément vers le dispositif périphérique correspondant à l'icône de dispositif de verrouillage.

2. Procédé selon la revendication 1, consistant en outre à :
transmettre une requête pour exécuter la seconde application correspondant au second élément parmi la pluralité d'éléments à un dispositif périphérique apparié au terminal mobile (100) en réponse à une entrée de glisser qui s'étend à partir du second élément dans une direction qui est éloignée de la zone d'affichage générale (210).

3. Procédé selon la revendication 1, dans lequel :
la pluralité d'éléments sont des icônes d'applications correspondant aux applications exécutées récemment dans le terminal mobile ;
le premier élément correspond à une première application ; et
l'écran d'exécution est destiné à la première application,
ou dans lequel chacun de la pluralité d'éléments est un élément d'alarme notifiant un événement associé à une application et détecté au niveau du terminal mobile.

4. Terminal mobile (100) comprenant :
un dispositif d'affichage (151) ;
un module de communication de courte portée (114) configuré pour exécuter une communication de courte portée ; et
une unité de commande (180) configurée pour commander l'affichage (151) et le module de communication de courte portée (114),
dans lequel l'unité de commande (180) est configurée en outre pour :
afficher une pluralité d'éléments dans une zone d'affichage de déformation d'un écran sur le dispositif d'affichage, l'écran comprenant la zone d'affichage de déformation (230) et une zone d'affichage générale (210),
recevoir une première entrée pour faire glisser un premier élément parmi la pluralité d'éléments compris dans la zone d'affichage de déformation (230) vers la zone d'affichage générale (210),
afficher un écran d'exécution sur une première application correspondant au premier élément en réponse à la première entrée,
**caractérisé en ce que** l'unité de commande (180) est configurée en outre pour :
recevoir une deuxième entrée, qui est plus longue qu'un temps prédéfini pour sélectionner un second élément parmi la pluralité d'éléments,
afficher une pluralité d'icônes de dispositifs de verrouillage dans la zone d'affichage générale (210), chaque icône de la pluralité d'icônes de dispositifs de verrouillage représentant un dispositif périphérique apparié avec le terminal mobile (100),
recevoir une troisième entrée pour glisser le second élément sélectionné vers une icône de dispositif de verrouillage parmi la pluralité d'icônes de dispositifs de verrouillage, et
transmettre une requête d'exécution pour exécuter une application correspondant au second élément vers le dispositif périphérique correspondant à l'icône de dispositif de verrouillage.

5. Terminal mobile (100) selon la revendication 4, dans lequel l'unité de commande (180) est configurée en outre pour transmettre une requête en vue d'exécuter la seconde application correspondant au second élément parmi la pluralité d'éléments à un dispositif périphérique apparié au terminal mobile (100) en réponse à une entrée de glisser qui s'étend à partir du second élément dans une direction qui est éloignée de la zone d'affichage générale (210).

6. Terminal mobile (100) selon la revendication 4, dans lequel :
la pluralité d'éléments sont des icônes d'applications correspondant à des applications exécutées récemment dans le terminal mobile, ou dans lequel chaque élément parmi la pluralité d'éléments est un élément d'alarme notifiant un événement associé à une application et détecté au niveau du terminal mobile.
